# EUROPEAN PATENT APPLICATION

(11) **EP 4 478 454 A1**
(43) Date of publication of application: **18.12.2024**
(21) Application number: 24150363.0
(22) Date of filing: 04.01.2024
(51) Int. Cl.: H01M 4/36, H01M 4/587

(54) **NEGATIVE ACTIVE MATERIAL FOR RECHARGEABLE LITHIUM BATTERY AND RECHARGEABLE LITHIUM BATTERY INCLUDING SAME**

(30) Priority: 04.01.2023 KR 20230001362; 20.12.2023 KR 20230187738
(71) Applicant: Samsung SDI Co., Ltd., Yongin-si, Gyeonggi-do 17084 (KR)
(72) Inventor: KIM, Narae, 17084 Yongin-si (KR); KIM, Deok-Hyun, 17084 Yongin-si (KR); CHOI, Hee Seon, 17084 Yongin-si (KR); CHA, Yurim, 17084 Yongin-si (KR)
(74) Representative: Marks & Clerk LLP

(57) **Abstract**

A negative active material for a rechargeable lithium battery, including tertiary particles including graphite and an agglomerated product where secondary particles where a plurality of primary particles is agglomerated and spheroidized, are agglomerated, and an amorphous carbon coating layer surrounding the tertiary particles.

## Description

### BACKGROUND

### 1. Field

Embodiments relate to a negative active material for a rechargeable lithium battery and a rechargeable lithium battery including the same.

### 2. Description of the Related Art

Recently, the rapid development of electronic devices such as mobile phones, laptop computers, and electric vehicles using batteries has resulted in surprising increases in demand for rechargeable batteries with relatively high capacity and lighter weight. For example, a rechargeable lithium battery has recently drawn attention as a driving power source for portable devices, as it has lighter weight and high energy density. Accordingly, research for improving performance of rechargeable lithium batteries is actively being conducted.

### SUMMARY

Embodiments are directed to a negative active material for a rechargeable lithium battery, including tertiary particles including graphite and an agglomerated product where secondary particles where a plurality of primary particles is agglomerated and spheroidized, are agglomerated, and an amorphous carbon coating layer surrounding the tertiary particles, wherein the primary particles and the secondary particles are natural graphite.

Embodiments are directed to a negative electrode including the negative material, a positive electrode, and an electrolyte.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1A shows a schematic view of the structure of the negative active material for a rechargeable lithium battery according to some embodiments;
FIG. 1B shows an enlarged schematic view of the tertiary particles of the structure of the negative active material shown in FIG. 1A;
FIG. 2 shows a schematic view of the structure of the conventional negative active material;
FIG. 3 shows products in each process of the negative active material preparation according to some embodiments;
FIG. 4 shows a schematic perspective view of a rechargeable lithium battery according to some embodiments;
FIGS. 5A and 5B are each a SEM image of the negative active material according to Example 1;
FIGS. 6A and 6B are each a SEM image of the negative active material according to Comparative Example 1;
FIGS. 7A and 7B are each a SEM image of the negative active material according to Comparative Example 2; and
FIGS. 8A and 8B are each a SEM image of the negative active material according to Comparative Example 4.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

Unless otherwise defined in the specification, it will be understood that when an element such as a layer, film, region, or substrate is referred to as being "on" another element, it can be directly on the other element or intervening elements may also be present.

Unless otherwise defined in the specification, expression in the singular may include expressions in plural. Unless otherwise defined, "A or B" may indicate "include A or B, or include both A and B".

In the present disclosure, when a definition is not otherwise provided, a particle diameter may be an average particle diameter. Such a particle diameter or size (D50) indicates an average particle diameter or size (D50) where a cumulative volume is about 50 volume% in a particle size distribution. The average particle size (D50) may be measured by a suitable method, for example, by a particle size analyzer, or by a transmission electron microscopic image, or a scanning electron microscopic image. Alternatively, a dynamic light-scattering measurement device may be used to perform a data analysis, and the number of particles may be counted for each particle size range, and from this, the average particle diameter (D50) value may be easily obtained through a calculation. It may be measured using a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50% standard of particle distribution in the measuring device.

A negative active material for a rechargeable lithium battery according to some embodiments may include tertiary particles including graphite and an agglomerated product in which secondary particles may be agglomerated, where the secondary particles may be prepared by agglomerating and spheroidizing a plurality of primary particles; and an amorphous carbon coating layer may surround the tertiary particles. The primary particles and the secondary particles are natural graphite.

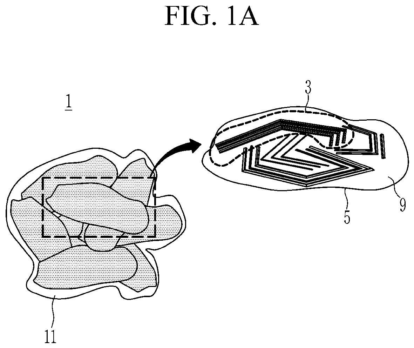

FIG. 1A shows a schematic view of a structure of such a negative active material. In FIG. 1A, a right part shows an enlarged view of secondary particles 5 corresponding to a dotted line. The negative active material 1 according to some embodiments may include secondary particles 5 in which a plurality of primary particles 3 are agglomerated and spheroidized, and tertiary particles, in which the secondary particles 5 are agglomerated. An amorphous carbon coating layer 11 surrounding the natural graphite tertiary particle may be included. The tertiary particle further includes graphite and this graphite may include artificial graphite. For example, artificial graphite 9 may be positioned on a surface of the primary particles 3 and a surface of the secondary particles 5 surface.

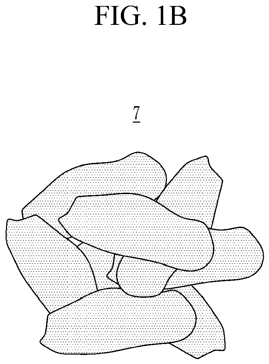

FIG. 1B more clearly shows the tertiary particles 7 in FIG. 1A.

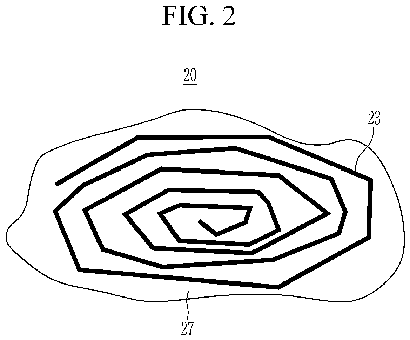

Crystalline carbon, e.g., natural graphite used as the negative active material may have a higher capacity than artificial graphite, so it may accomplish an ideal capacity close to the theoretical capacity. However, natural graphite may include large-sized particles having a particle diameter of about 40 µm to about 120 µm, so it may be subjected to a spheroidizing process to use as negative active material. FIG. 2 shows the structure of the general natural graphite negative active material 20 which includes flake natural graphite 23 and an amorphous carbon coating layer 27 on a surface of the flake natural graphite. Such a negative active material may include limited sites at which intercalation and deintercalation may occur, and thus, unsuitable charge and discharge characteristics, e.g., unsuitable high-rate charge and discharge characteristics may be exhibited.

The negative active material according to some embodiments may include secondary particles in which primary particles being pulverized (*e.g*. pulverized primary particles) are agglomerated and spheroidized, and tertiary particles including an agglomerated product in which the secondary particles are agglomerated, and graphite. The primary particles and the secondary particles are natural graphite. The graphite may be artificial graphite and this graphite may be artificial graphite positioned on a surface of the primary particles and a surface of the secondary particles. This negative active material may help enable increased sites at which lithium ions are intercalated and deintercalated, and thus, the movement of lithium ions may be facilitated. As such, the negative active material according to some embodiments may exhibit improved rapid charge and discharge characteristics.

In some embodiments, the natural graphite may be flake natural graphite which may render the lithium intercalation to occur more actively. According to another embodiment, the flake natural graphite may be the small-sized flake natural graphite. If natural graphite is the small-sized flake natural graphite, sites where the lithium ions may be intercalated and deintercalated may be more increased in the same area, and passages through where the lithium ion may be transferred may become shorter, making it more suitable for a rapid charge and discharge.

The negative active material according to some embodiments may be prepared by spheroidizing and bending the small-sized primary particles, and thus, lithium may intercalate into the negative active material, e.g., not only into both ends of the flake natural graphite, but also into the bent portion. As such, the negative active material according to some embodiments may include increased lithium intercalation sites and thus, improved chargeability, especially, high-rate chargeability may be exhibited.

The primary particles may have a particle diameter of about 4 µm to about 8 µm. The particle diameter of the primary particles may be, e.g., about 5 µm to about 8 µm, about 6 µm to about 8 µm, or about 6 µm to about 7 µm.

The secondary particles may have a particle diameter of about 5 µm to about 10 µm. The particle diameter of the secondary particles may be, e.g., about 6 µm to about 10 µm, about 6 µm to about 8 µm, or about 7 µm to about 8 µm.

The tertiary particles may have a particle diameter of about 9 µm to about 15 µm. In an implementation, it may be about 9.2 µm to about 15 µm, or about 9.5 µm to about 15 µm.

If the particle diameter of the primary particles is within the range of about 4 µm to about 8 µm, it may be easily prepared, the cycle-life characteristics may be further improved, and it may be readily applicable for the rechargeable lithium battery. If the particle diameter of the secondary particle is about 5 µm to about 10 µm, it may readily prepare the tertiary particles, and it may be readily applicable for the rechargeable lithium battery. If the particle diameter of the tertiary particles is about 9 µm to about 15 µm, the more excellent initial efficiency may be exhibited and the excellent charge and discharge characteristics of the negative electrode may be exhibited, which may result in ready application for the rechargeable lithium battery.

In the negative active material according to some embodiments, a thickness of the amorphous carbon coating layer may be about 5 nm to about 50 nm, e.g., about 10 nm to about 50 nm, or about 20 nm to about 50 nm. The amorphous carbon coating layer with a thickness within these ranges may more effectively suppress the side reaction with the electrolyte and may improve the charge and discharge rate capability. In one or more embodiments, the thickness of the amorphous carbon coating layer may be measured by a SEM image or a TEM image for the cross-section of the negative active material, but it is limited thereto, and thus, it may be measured by any techniques as long as the thickness of the amorphous carbon coating layer is measured. The thickness may be an average thickness.

The negative active material including primary particles, the secondary particles and the tertiary particles having these particle diameters and the amorphous carbon coating layer with these thicknesses may have a particle diameter of about 9.05 µm to about 16 µm. The particle diameter of the negative active material may be, e.g., about 9.05 µm to about 16 µm, about 9.2 µm to about 15.5 µm, or about 9.5 µm to about 15 µm. If the particle diameter of the negative active material is within these ranges, it may facilitate the intercalation of lithium ions, improving the charge rate capability and exhibiting excellent initial efficiency and cycle-life characteristics.

In some embodiments, the secondary particle may be formed by agglomerating a plurality of primary particles. The secondary particle may be formed by gathering, e.g., about 2 to about 30, about 2 to about 20, about 2 to about 10, or about 2 to about 4 primary particles. In some embodiments, the tertiary particle may be formed by agglomerating the secondary particles. The tertiary particle may be formed by gathering, e.g., about 2 to about 20, about 2 to about 10, or about 2 to about 4 secondary particles.

In some embodiments, an amount of the graphite may be about 9 wt% to about 16.5 wt%, about 9 wt% to about 15 wt%, or about 10 wt% to about 14.5 wt% based on the total 100 wt% of the negative active material. In one embodiment, the graphite, for example, artificial graphite may be positioned on a surface of the primary particles and the surface of the secondary particles, and the graphite with an amount within the above ranges may make the inside of the negative active material much denser. As the negative active material according to one embodiment may include secondary particles in which primary particles are agglomerated and spheroidized and tertiary particles in which the secondary particles are agglomerated, artificial graphite filled into spaces which may be formed between the particles, e.g., artificial graphite filled in the above amounts, may more sufficiently pack the spaces. This may enable the inside of the negative active material to be dense.

In one embodiment, an amount of natural graphite may be about 78.5 wt% to about 89 wt%, about 80 wt% to about 88.5 wt%, or about 80.5 wt% to about 88 wt% based on the total 100 wt% of the negative active material.

The negative active material according to one embodiment may have an orientation index (O.I.) of about 40 to about 70, about 45 to about 70, or about 50 to about 60. The negative active material with an orientation index within these ranges may indicate a random-orientation that is similar to artificial graphite, and thus the negative active material according to one or more embodiments may exhibit excellent charge rate capability similar to artificial graphite.

In one or more embodiments, the orientation index may be obtained from an X-ray diffraction analysis using a CuKα ray, e.g., it may be obtained as a ratio (I₀₀₂/I₁₁₀) of a peak intensity at a (002) plane relative to a peak intensity at a (110) plane.

As such, the negative active material according to one embodiment may have all advantages of high capacity, good pression properties and excellent pellet density from use of natural graphite, the improved high-rate charge capability from the increased lithium intercalation sites by including secondary particles in which the small-sized primary particles are agglomerated, and high charge capability of artificial graphite. The effects for improving the charge and discharge rate characteristics by including the amorphous carbon coating layer may also be obtained.

The amorphous carbon may include soft carbon, hard carbon, mesophase pitch carbide, sintered cokes, or mixtures thereof. In one embodiment, an amount of the amorphous carbon may be about 1 wt% to about 5 wt% based on the total 100 wt% of the negative active material.

The negative active material may have a tap density of about 0.8 g/cc to about 1.1 g/cc, e.g., about 0.9 g/cc to about 1.1 g/cc. If the negative active material has tap density in these ranges, the internal pore volume of the negative active material and the side reaction with an electrolyte may decrease, so as to improve cycle-life characteristics of a battery. In one or more embodiments, the tap density may be obtained by averaging the values obtained from three measurements by applying pressure of about 108N using the GeoPyc 1360 Pycnometer available from Micromeritics Instruments Corporation, into which a chamber having a diameter of about 19.1 mm and with a conversion factor of 0.2907 cm³/mm is inserted.

The negative active material according to one embodiment may have a mercury cumulative pore volume (Hg Cumulative Pore volume) of about 0.01 mL/g to about 0.07 mL/g, about 0.03 mL/g to about 0.07 mL/g, or about 0.04 mL/g to about 0.07 mL/g. A mercury cumulative pore volume within the range may indicate that the pores, e.g., empty spaces inside of the negative active material, are small. The pores measured in the pore volume may have a particle diameter of about 0.01 µm to about 1 µm.

If the mercury cumulative pore volume satisfies these ranges, the amount of the amorphous carbon in the negative active material may be appropriate, and thus, the excellent negative active material efficiency may be realized. If the mercury cumulative pore volume is within these ranges, the inside of the negative active material may remain dense enough to be well impregnated by the electrolyte, while maintaining adequate area to react with the electrolyte, and thus, the suitable cycle-life characteristics may be exhibited without severe side-reaction.

In some embodiments, the mercury cumulative pore volume may be obtained by adding mercury to the negative active material, applying a pressure of about 0.1 psi to about 60,000 psi to inject mercury into the negative active material, and measuring a change in volume of mercury according to a change in pressure. The change in pressure may be obtained by adjusting the pressure from about 0.1 psi to about 0.2 psi to about 50,000 psi to 60,000 psi.

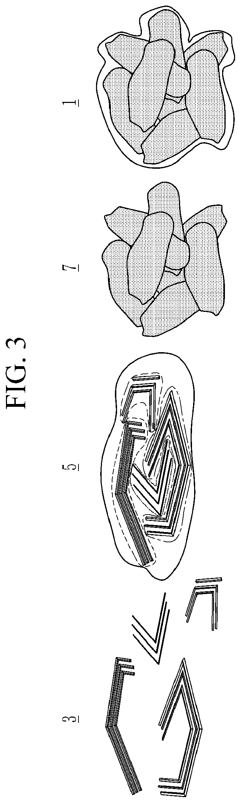

The negative active material may be prepared by the following procedure. Hereinafter, for clearly illustrating the products obtained from each process, the materials shown in FIG. 1A and FIG. 1B are described, with reference to FIG. 3.

Natural graphite raw material having a particle diameter of about 80 µm or more may be subjected to pulverization and small-sizing to be formed into primary particles (3 of FIG. 3). The natural graphite raw materials may be pulverized into the primary particles by an airstream grinding method. The airstream grinding may be performed by grinding the natural graphite with an airstream under conditions of about 5 kg/cm² to about 20 kg/cm² at ambient temperature.

The natural graphite raw material may be a flake natural graphite.

The pulverization and small-sizing may be performed in order to have a particle diameter of primary particles of about 4 µm to about 8 µm, e.g., about 4 µm to about 7 µm, about 4 µm to about 6 µm, or about 5 µm to about 7 µm.

The primary particles may be subjected to spheroidization and agglomeration using spheroidizing equipment to prepare secondary particles (5 of FIG. 3). The spheroidization and agglomeration may be performed in order to have a particle diameter of the secondary particle of about 5 µm to about 10 µm, e.g., about 6 µm to about 10 µm, about 6 µm to about 8 µm, or about 7 µm to about 8 µm .

Thereafter, the secondary particle may be mixed with the first amorphous carbon precursor to prepare a mixed product. According to this process, the inside of the secondary particle may be made more dense.

A second amorphous carbon precursor may be added to the resulting mixed product and agglomerate to prepare tertiary particles (7 of FIG. 3). The agglomeration may be performed by using general agglomeration equipment.

The first and the second amorphous carbon precursor may be the same or different from each other, and may be, e.g., a phenolic resin, a furan resin, an epoxy resin, polyacrylonitrile, a polyamide resin, a polyimide resin, a polyamide imide resin, synthetic pitch, petroleum-based pitch, coal-based pitch, tar, or a combination thereof.

The first and the second amorphous carbon precursor may convert to crystalline carbon, e.g., artificial graphite during the subsequent heat-treatment, and thus, the mixing ratio of the secondary particles, and the first and the second amorphous carbon precursor may be adjusted to have about 10 wt% to about 15% of artificial graphite based on the total 100 wt% of the negative active material in the final product.

The process may allow the first and the second amorphous carbon precursors to be inserted inside of the secondary particles, resulting in it on the surface of primary particles and also the surface of the secondary particles.

The resulting tertiary particles may be primarily heat-treated. The primary heat treatment may be carried out at a suitably high temperature in order to form graphite from the first and the second amorphous carbon precursor, for example, about 2,800 °C to about 3,000 °C. The primary heat treatment may be performed for about 1 hour to about 5 hours, e.g., about 1 hour to about 4 hours, or about 1 hour to about 3 hours. According to the process, the first and the second amorphous carbon precursors may be converted into graphite, for example, artificial graphite. The first and the second amorphous carbon precursors positioned on the surface of the primary particles and the surface of the secondary particles may be converted into graphite, for example, artificial graphite, and thereby artificial graphite may be on these surfaces.

The resulting primary heat treatment product may be coated with a third amorphous carbon precursor. The third amorphous carbon precursor may be, e.g., a phenolic resin, a furan resin, an epoxy resin, polyacrylonitrile, a polyamide resin, a polyimide resin, a polyamide imide resin, synthetic pitch, petroleum-based pitch, coal-based pitch, tar, or a combination thereof. The third amorphous carbon precursor may be the same to or different from the first or the second amorphous carbon precursors.

In the coating, an amount of the third amorphous carbon precursor may be appropriately adjusted so that the thickness of the amorphous carbon coating layer may be about 5 nm to about 60 nm in the negative active material, as the final product.

The coated product may be secondarily heat-treated. The secondary heat-treatment may be carried out at about 800 °C to about 2,000 °C, e.g., about 800 °C to about 1,800 °C, about 800 °C to about 1,600 °C, about 800 °C to about 1,400 °C, or about 1,200 °C to about 1,300 °C. The secondary heat-treatment may be carried out for about 1 hour to about 5 hours, about 1 hour to about 4 hours, or about 1 hour to about 3 hours.

Another embodiment provides a rechargeable lithium battery including a negative electrode, a positive electrode, and an electrolyte.

The negative electrode may include a negative active material layer including the negative active material according to one embodiment, a binder, and optionally a conductive material, and a current collector supporting the negative active material layer.

In the negative active material layer, the amount of the negative active material may be about 95 wt% to about 99 wt% based on the total 100 wt% of the negative active material layer.

An amount of the binder may be about 1 wt% to about 5 wt% based on the total 100 wt% of the negative active material layer.

If the conductive material is further included, an amount of the negative active material may be about 90 wt% to about 98 wt% based on the total 100 wt% of the negative active material layer and the amount of the binder and the conductive material may be about 1 wt% to about 5 wt%, respectively, based on the total 100 wt% of the negative active material layer.

The binder may improve binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or combinations thereof.

If an aqueous binder is used as a negative binder, a cellulose-based compound may be further used to provide viscosity as a thickener. The cellulose-based compound may include, e.g., carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The conductive material may be included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include, e.g., a copper foil, a nickel foil, a stainless steel foil, a titanium foil, a nickel foam, a copper foam, a polymer substrate coated with a conductive metal, and a combination thereof.

The positive electrode may include a current collector and a positive active material layer formed on the current collector.

The positive active material may include lithiated intercalation compounds that reversibly intercalate and deintercalate lithium ions. In some embodiments, one or more composite oxides of a metal, e.g., cobalt, manganese, nickel, or a combination thereof, and lithium, may be used. In an implementation, the compounds represented by one of the following chemical formulae may be used. LiₐA_{1-b}X_{b}D₂ (0.90≤a≤1.8, 0≤b≤0.5); LiₐA_{1-b}X_{b}C_{2-c}D_{c} (0.90≤a≤1.8, 0≤b≤0.5, 0≤c≤0.05); LiₐE_{1-b}X_{b}O_{2-c}D_{c} (0.90≤a≤1.8, 0≤b≤0.5, 0≤c≤0.05); LiₐE_{2-b}X_{b}O_{4-c}D_{c} (0.90≤a≤1.8, 0≤b≤0.5, 0≤c≤0.05); LiₐNi_{1-b-c}Co_{b}X_{c}D_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α≤2); LiₐNi_{1-b-c}Co_{b}X_{c}O_{2-α}T₂ (0.90≤a≤1.8, 0≤b≤0.5, 0≤c≤0.5, 0<α≤2); LiₐNi_{1-b-c}Mn_{b}X_{c}D_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α≤2); LiₐNi_{1-b-c}Mn_{b}X_{c}O_{2-α}T₂ (0.90≤a≤1.8, 0≤b≤0.5, 0≤c≤0.5, 0<α≤2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNi_{b}Co_{c}Al_{d}GₑO₂ (0.90≤a≤1.8, 0≤b≤0.9, 0≤c≤0.5, 0≤d≤0.5, 0≤e≤0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8).

In the above chemical formulae, A may be, e.g., Ni, Co, Mn, or combinations thereof; X may be, e.g., Al, Ni, Co, Mn, Cr, Fe, Mg, Sr, V, a rare earth element, or combinations thereof; D may be, e.g., O, F, S, P, or combinations thereof; E may be, e.g., Co, Mn, or combinations thereof; T may be, e.g., F, S, P, or combinations thereof; G may be, e.g., Al, Cr, Mn, Fe, Mg, La, Ce, Sr, V, or combinations thereof; Q may be, e.g., Ti, Mo, Mn, or combinations thereof; Z may be, e.g., Cr, V, Fe, Sc, Y, or combinations thereof; J may be, e.g., V, Cr, Mn, Co, Ni, Cu, or combinations thereof; L¹ may be, e.g., Mn, Al, or combinations thereof.

The compounds may have a coating layer on the surface, or may be mixed with another compound having a coating layer. The coating layer may include at least one coating element compound, e.g., an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include, e.g., Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In embodiments, the positive active material layer may further include a binder and a conductive material. The binder and the conductive material may be included in an amount of about 1 wt% to about 5 wt%, respectively based on the total amount of the positive active material layer.

The binder may improve binding properties of positive active material particles with one another and with a current collector. In an implementation, the binder may be, e.g., polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like.

The conductive material may be included to provide electrode conductivity, and any electrically conductive material may be used as a conductive material unless it causes a chemical change. In an implementation, the conductive material may include, e.g., a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may include Al.

The electrolyte may include a non-aqueous organic solvent or a lithium salt. The non-aqueous organic solvent may serve as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, propyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethyl alcohol, isopropyl alcohol, and the like, and examples of the aprotic solvent include nitriles such as R-CN (where R may be a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the non-aqueous organic solvent is used in a mixture, the mixture ratio may be controlled in accordance with a desirable battery performance, and it may be well known to those skilled in the related art.

The carbonate-based solvent may include a mixture with a cyclic carbonate and a linear carbonate. The cyclic carbonate and linear carbonate may be mixed together in a volume ratio of about 1:1 to about 1:9, and if the mixture is used as an electrolyte, it may have enhanced performance.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

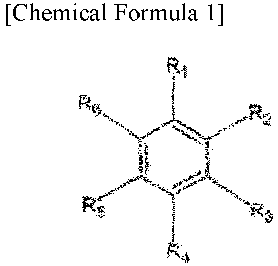

In Chemical Formula 1, R₁ to R₆ may be the same or different and may be, e.g., hydrogen, a halogen, a C1 to C10 alkyl group, a haloalkyl group (e.g., a C1 to C10 haloalkyl group), or a combination thereof.

In an implementation, the aromatic hydrocarbon-based organic solvent may be, e.g., benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combinations thereof.

The electrolyte may further include vinylethyl carbonate, vinylene carbonate, or an ethylene carbonate-based compound represented by Chemical Formula 2 as an additive for improving cycle life.

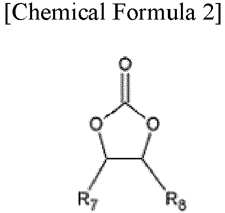

In Chemical Formula 2, R₇ and R₈ may be the same or different and each may be independently, e.g., hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

In an implementation, the ethylene carbonate-based compound may be, e.g., difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent may supply a battery with lithium ions, basically operate the rechargeable lithium battery, and improve transportation of the lithium ions between a positive electrode and a negative electrode. In an implementation, the lithium salt may include at least one or two supporting salts, e.g., LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, e.g., an integer of about 1 to about 20, lithium difluoro(bisoxolato) phosphate, LiCl, LiI, LiB(C₂O₄)₂ (lithium bis(oxalato) borate: LiBOB) and lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be between the positive electrode and the negative electrode depending on a type of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

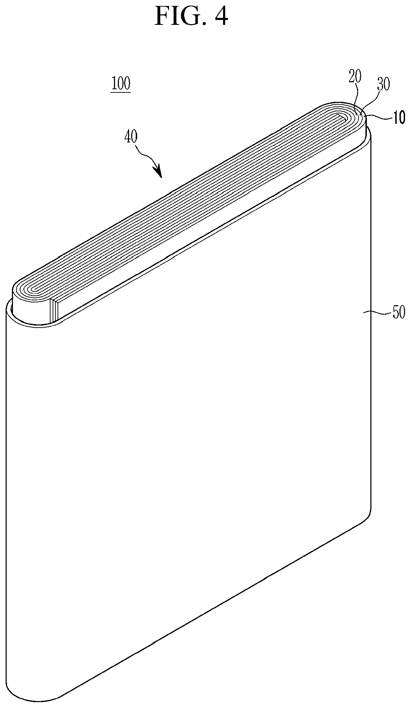

FIG. 4 is a schematic perspective view of a rechargeable lithium battery according to an embodiment. The rechargeable lithium battery according to some embodiments is illustrated as a prismatic battery and may include variously-shaped batteries such as a cylindrical battery, a pouch battery, or the like.

Referring to FIG. 4, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

Hereinafter, examples of the present invention and comparative examples are described. These examples, however, are not in any sense to be interpreted as limiting the scope of the disclosure.

### (Example 1)

A flake natural graphite raw material having a particle diameter of 80 µm to 120 µm was airstream grinded to prepare small-sized primary particles. The small-sized primary particles were spheroidized and agglomerated by using a spheroidizing equipment to prepare secondary particles. The secondary particles were mixed with a first pitch carbon to prepare a mixed product.

Thereafter, a second pitch carbon was added to the mixed product and agglomerated to prepare tertiary particles.

The prepared tertiary particles were primarily heat treated at 2,800 °C for 2 hours. During the heat treatment, the first and the second pitch carbons were graphitized and existed as artificial graphite on the surfaces of the primary particles and the secondary particles.

The resulting heat-treated product was coated with a third pitch carbon and they were secondarily heat-treated at 1,200 °C for 2 hours to prepare a negative active material.

The prepared negative active material included secondary particles in which primary particles were agglomerated and spheroidized, and natural graphite tertiary particles in which the secondary particles were agglomerated, artificial graphite positioned on the surface of the primary particles and the surface of the secondary particles, and a soft carbon coating layer surrounding the surface of the tertiary particles.

During preparation, the used amounts of the tertiary particles, the first pitch carbon, the second pitch carbon, and the third pitch carbon were adjusted in order to have an amount of natural graphite of 87 wt%, an amount of artificial graphite of 10 wt% and an amount of the soft carbon coating layer of 3 wt% in the prepared negative active material based on the total 100 wt% of the negative active material.

Average particle diameters, D50 of the prepared primary particles, secondary particles, tertiary particles, and negative active materials, and the tap density are each shown in Table 1.

97.5 wt% of the negative active material, 1.5 wt% of styrene-butadiene rubber binder, and 1.0 wt% of carboxymethyl cellulose thickener were mixed in a water solvent to prepare a negative active material slurry.

The negative active material slurry was coated on a Cu foil current collector, dried and pressurized under a general procedure to prepare a negative electrode including the current collector and a negative active material layer formed on the current collector.

Using the negative electrode, a lithium metal counter electrode, and an electrolyte, a coin-type half-cell was fabricated. The electrolyte used was a 1.5 M LiPF₆ solution in a mixed solvent of ethylene carbonate, ethylmethyl carbonate and dimethyl carbonate (20:10:70 volume ratio).

### (Example 2 to 6)

Each negative electrode and half-cell were fabricated by the same procedure in Example 1, except that average particle diameter (D50) of the primary particles, average particle diameter (D50) of the secondary particles, average particle diameter (D50) of the tertiary particles, and average particle diameter (D50) of the negative active materials, and a tap density were changed as shown in Table 1, and the amount of tertiary particles, the first pitch carbon, and the second pitch carbon were changed in order to have the amount of natural graphite, the amount of artificial graphite, and the amount of the soft carbon coating layer as shown in Table 2 in the prepared negative active material.

### (Comparative Example 1)

A flake natural graphite raw material having a particle diameter of 80 µm to 120 µm was airstream grounded to prepare small-sized primary particles. The small-sized primary particles were spheroidized and agglomerated using a spheroidizing equipment to prepare secondary particles.

A pitch carbon was added to the secondary particles and heat-treated at 1,200 °C for 2 hours to prepare a negative active material in which a soft carbon coating layer was formed on the surface of the secondary particles.

The used amounts of the secondary particle and the pitch carbon were adjusted in order to have an amount of the natural graphite secondary particles of 93 wt% and the amount of the soft carbon coating layer of 7 wt% based on the total 100 wt% of the negative active material.

Average particle diameters, D50 of the prepared primary particles, secondary particles, and negative active materials, and a tap density are each shown in Table 1.

The negative active material was used to fabricate a negative electrode and a half-cell by the same procedure as in Example 1.

### (Comparative Example 2)

A flake natural graphite raw material having a particle diameter of 80 µm to 120 µm was spheroidized by using a spheroidizing equipment and then heat-treated at 1,200 °C for 2 hours to prepare a negative active material.

An average particle diameter, D50 of the prepared negative active materials and a tap density are each shown in Table 1.

The negative active material was used to fabricate a negative electrode and a half-cell by the same procedure as in Example 1.

### (Comparative Example 3)

A negative electrode and a half-cell were fabricated by the same procedure as in Comparative Example 2, except that the tap density and the average particle diameter, D50 of the negative active material were changed as shown in Table 1.

### (Comparative Example 4)

Petroleum cokes were airstream grinded to prepare small-sized primary particles. The small-sized primary particles were agglomerated to prepare secondary particles.

The secondary particles were heat treated at 3,000 °C for 2 hours to prepare artificial graphite.

A negative active material was prepared by the same procedure as in Comparative Example 2, except for using artificial graphite.

An average particle diameter, D50 of the prepared primary particles, secondary particles and negative active materials and a tap density are each shown in Table 1.

The negative active material was used to fabricate a negative electrode and a half-cell by the same procedure as in Example 1.

### (Comparative Example 5 and 6)

A negative electrode and a half-cell were fabricated by the same procedure as in Comparative Example 4, except that the tap density and an average particle diameter, D50 of the primary particles, secondary particles and negative active materials were changed as shown in Table 1.

### (Comparative Example 7)

A negative active material was prepared by the same procedure as in Comparative Example 2, except that a mixture of natural graphite and artificial graphite (50:50 by weight ratio) was used instead of flake natural graphite.

An average particle diameter, D50 of the prepared negative active materials and a tap density are each shown in Table 1.

The negative active material was used to fabricate a negative electrode and a half-cell by the same procedure as in Example 1.

### Experimental Example 1) Measurement of pellet density

1g of the negative active materials according to Examples 1 to 6 and Comparative Examples 1 to 7 were each individually added to a mold and maintained under 2 tons of pressure (press force) for 30 seconds to prepare a pellet, and a pellet density of the pellet was measured. The results are shown in Table 1.

The negative active materials of Comparative Examples 2, 3, and 7 were not in the form of secondary particles agglomerated primary particles, and thus, only average particle diameter of the negative active material is shown in Table 1.

**(Table 1)**

| | Average particle diameter of primary particle (D50, µm) | Average particle diameter of secondary particle (D50, µm) | Average particle diameter of tertiary particle (D50, µm) | Average particle diameter of negative active material (D50, µm) | Pellet density (g/cc) | Tap density (g/cc) |
|---|---|---|---|---|---|---|
| Example 1 | 4.9 | 6.1 | 10.4 | 10.5 | 1.66 | 1.04 |
| Example 2 | 5.0 | 6.5 | 11.2 | 11.4 | 1.66 | 1.07 |
| Example 3 | 5.7 | 6.8 | 11.4 | 11.5 | 1.63 | 1.11 |
| Example 4 | 6.0 | 7.5 | 13.2 | 13.3 | 1.62 | 1.10 |
| Example 5 | 6.8 | 9.0 | 14.8 | 15 | 1.60 | 1.12 |
| Example 6 | 4.2 | 6.0 | 9.6 | 9.7 | 1.68 | 1.04 |
| Comparative Example 1 | 14.5 | 15.9 | | 16 | 1.78 | 1.20 |
| Comparative Example 2 | - | - | - | 11 | 1.63 | 1.10 |
| Comparative Example 3 | - | - | - | 17 | 1.77 | 1.14 |
| Comparative Example 4 | 10.1 | 12.7 | | 13 | 1.54 | 1.03 |
| Comparative Example 5 | 11.4 | 13.3 | | 13.5 | 1.48 | 1.04 |
| Comparative Example 6 | 9.8 | 10.9 | | 11 | 1.50 | 1.01 |
| Comparative Example 7 | - | - | - | 13 | 1.60 | 1.09 |

**(Table 2)**

| | Amount of natural graphite (wt%) | Amount of artificial graphite (wt%) | Amount of soft carbon coating layer (wt%) |
|---|---|---|---|
| Example 1 | 87 | 10 | 3 |
| Example 2 | 85.5 | 11.5 | 3 |
| Example 3 | 83.5 | 13.5 | 3 |
| Example 4 | 83 | 14 | 3 |
| Example 5 | 83.5 | 14.5 | 2 |
| Example 6 | 85 | 11 | 4 |

### Experimental Example 2) Measurement of SEM

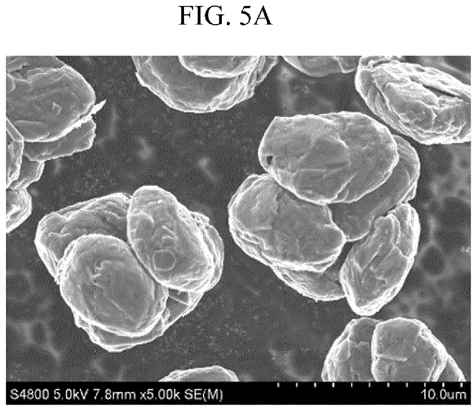

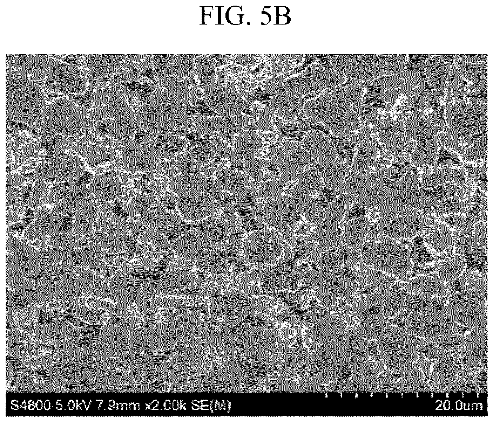

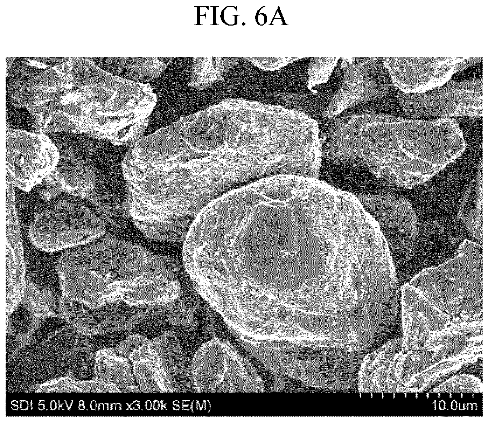

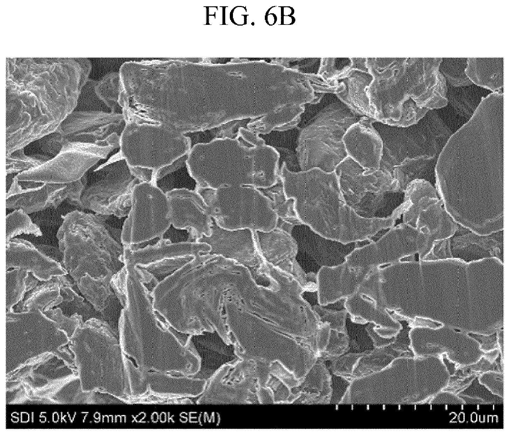

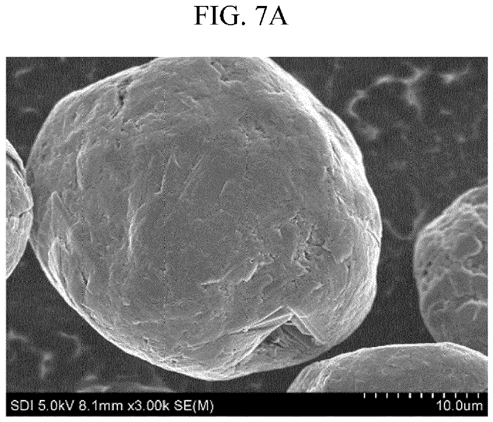

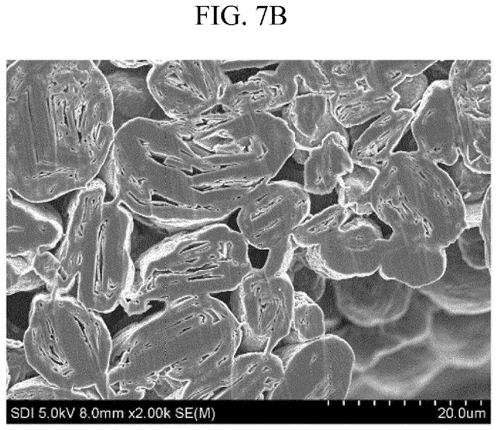

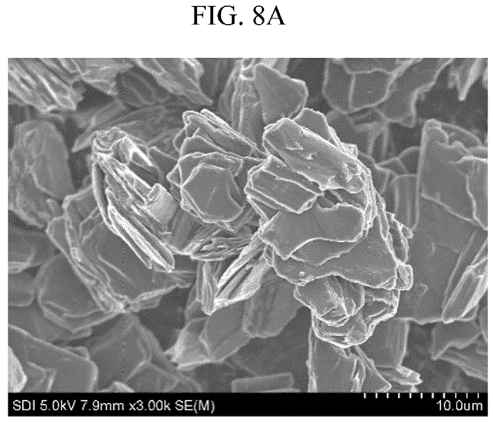

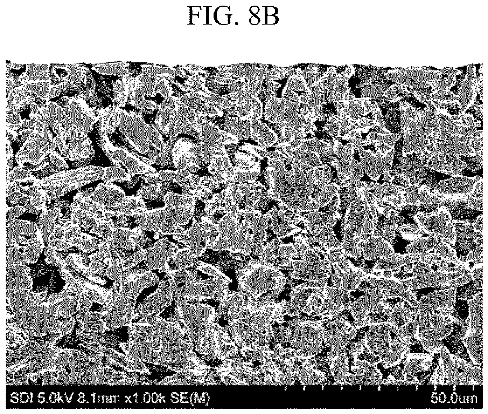

The SEM images of the negative active materials according to Example 1, Comparative Example 1, Comparative Example 2, and Comparative Example 4 are shown in FIG. 5A to FIG. 8B, respectively. FIGS. 5A and FIGS. 6A are 3,000 magnification SEM images and FIGS. 5B and FIGS. 6B are 1,000 magnification SEM images. FIGS. 5A and 5B clearly showed that the negative active material according to Example 1 had a form in which particles with diameters of approximately 6 µm were agglomerated, which is similar to artificial graphite of Comparative Example 4 shown in FIGS. 8A and 8B. Whereas, as shown in FIGS. 6A and 6B, the negative active material of Comparative Example 1 did not have a clear agglomerated form, which is similar to natural graphite of Comparative Example 2 as shown in FIGS. 7A and 7B.

### Experimental Example 3) Evaluation of X-ray diffraction analysis

X-ray diffraction analysis for the negative active materials according to Examples 1 to 6 and Comparative Examples 1 to 7 was conducted.

The X-ray diffraction analysis was performed by using a X'Pert (PANalytical B.V.) XRD equipment using a CuKα ray, but a monochromator equipment was removed in order to improve a peak intensity resolution. The measurement was performed under a condition of 2θ = 20° to 80 °, a scan speed (°/S) = 0.06436, and a step size of 0.026 °/step.

From these results, an interlayer d-spacing (d002) of a diffraction peak at a (002) plane, I(002) peak intensity and I(110) peak intensity were obtained. The orientation index which was I(002)/I(110) was measured. The results are shown in Table 3, as O.I. The interlayer distance (d002) is shown in Table 3.

### Experimental Example 3) Evaluation of mercury cumulative pore volume

The mercury cumulative pore volume of the negative electrode according to Examples 1 to 6 and Comparative Examples 1 to 7 was determined by adding mercury to the negative active material, applying a pressure of 0.1 psi to intrude mercury into the negative active material, and then increasing the pressure to 60,000 psi to measure a volume change of mercury. The results are shown in Table 3. The pores measured in the pore volume had a particle diameter of 0.01 µm to 1 µm.

### Experimental Example 4) Evaluation of capacity

The half-cells according to Examples 1 to 6 and Comparative Examples 1 to 7 were charged at 0.2 C to measure a charge capacity. The results are shown in Table 3.

### Experimental Example 5) Evaluation of charge capability

The half-cells according to Examples 1 to 6 and Comparative Examples 1 to 7 were charged and discharged at 0.2 C once, and charged and discharged at 2 C once.

A ratio of the charge capacity at 2 C relative to the charge capacity at 0.2 C was calculated. The results are shown in Table 3, as a charge rate capability (chargeability).

### Experimental Example 6) Evaluation of Direct Current internal resistance (DC-IR)

The half cells according to Examples 1 to 6 and Comparative Examples 1 to 7 were charged and discharged once under a condition of which constant current/constant voltage charging under a condition of 0.2C, 0.01 V, 0.01C cut-off at 25 °C, pausing for 10 minutes, constant current discharging under a condition of 0.2C, 1.5 V cut-off, and pausing for 10 minutes. DC internal resistance (DC-IR) was evaluated by measuring a voltage drop (V) while a current flowed at 8C for 10 seconds under a SOC50 (50% charge capacity based on 100% of entire battery charged capacity, which is 50% discharged in a discharged state). The resistance values were obtained from the measured voltage and the applied current (8C). The results are shown as a direct current internal resistance (DC-IR). The results are shown in Table 3.

The average particle diameters, D50, of the negative active materials are shown in Table 3.

**(Table 3)**

| | Average particle diameter of negative active material (D50, µm) | O.I. | Mercury pore volume (mL/g) | d002 (Å) | Capacity (mAh/g) | Chargeabil ity (%) | DC-IR (Ω) |
|---|---|---|---|---|---|---|---|
| Example 1 | 10.5 | 52 | 0.065 | 3.356 | 361 | 48.0 | 6.3 |
| Example 2 | 11.4 | 54 | 0.066 | 3.356 | 358 | 47.5 | 6.4 |
| Example 3 | 11.5 | 55 | 0.052 | 3.357 | 357 | 47.5 | 6.4 |
| Example 4 | 13.3 | 61 | 0.041 | 3.358 | 356 | 46.4 | 6.6 |
| Example 5 | 15 | 62 | 0.051 | 3.356 | 358 | 45.2 | 6.9 |
| Example 6 | 9.7 | 52 | 0.062 | 3.356 | 357 | 47.7 | 6.3 |
| Comparative Example 1 | 16 | 60 | 0.079 | 3.358 | 355 | 40 | 7.8 |
| Comparative Example 2 | 11 | 94 | 0.081 | 3.355 | 356 | 35 | 7.8 |
| Comparative Example 3 | 17 | 150 | 0.097 | 3.354 | 359 | 24 | 8.2 |
| Comparative Example 4 | 13 | 53 | 0.014 | 3.360 | 346 | 44.1 | 7.1 |
| Comparative Example 5 | 13.5 | 72 | 0.022 | 3.359 | 346 | 44.6 | 7.0 |
| Comparative Example 6 | 11 | 70 | 0.016 | 3.361 | 343 | 45 | 6.9 |
| Comparative Example 7 | 13 | 79 | 0.050 | 3.357 | 345 | 37.1 | 7.2 |

As shown in Table 3, the cells including the negative active materials of Examples 1 to 6 exhibited excellent high-rate chargeability, compared to Comparative Examples 1 to 7, and lower DC-IR resistance than Comparative Examples 1 to 5, and 7. Comparative Example 6 exhibited the same DC-IR resistance to that of Example 5, but exhibited slightly lower chargeability and extremely low capacity, compared to Example 5.

By way of summation and review, rechargeable a lithium battery may include a positive electrode and a negative electrode which may include an active material being capable of intercalating and deintercalating lithium ions, and an electrolyte, and capable of generating electrical energy due to the oxidation and reduction reaction if lithium ions are intercalated and deintercalated into the positive electrode and the negative electrode.

As a positive active material for a rechargeable lithium battery, transition metal compounds such as lithium cobalt oxide, lithium nickel oxide, lithium manganese oxide, or the like may be mainly used. For a negative active material, carbon-based active materials such as natural graphite, artificial graphite, or amorphous carbon, or silicon-based active material such as Si may be used.

Among these, artificial graphite may satisfy high power and long cycle-life, but the increases in the demand for the rechargeable lithium battery may continuously and increasingly require the demand for natural graphite, which is economical and has good capacity. However, as natural graphite may be prepared by spheroidizing flake graphite with large particle, its relatively larger crystallinity compared to artificial graphite, may cause the slow intercalation and deintercalation of lithium ions, and thus, the high power characteristics may not be satisfied.

A negative active material according to some embodiments may exhibit excellent cycle-life characteristics and high-rate capability. One embodiment provides a negative active material for a rechargeable lithium battery exhibiting improved high power characteristics. Another embodiment provides a rechargeable lithium battery including the negative active material.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

The present invention can also be defined by reference to the following clauses:
Clause 1. A negative active material for a rechargeable lithium battery, the negative active material comprising:
   tertiary particles including natural graphite and agglomerated secondary particles having a plurality of spheroidized and agglomerated primary particles;
   artificial graphite on a surface of the spheroidized primary particles and a surface of the secondary particles; and
   an amorphous carbon coating layer surrounding the tertiary particles.
Clause 2. The negative active material for a rechargeable lithium battery as in clause 1, wherein the natural graphite is a flake natural graphite.
Clause 3. The negative active material for a rechargeable lithium battery as in clause 1 or clause 2, wherein an amount of the artificial graphite is about 9 wt% to about 16.5 wt%, based on a total weight of the negative active material.
Clause 4. The negative active material for a rechargeable lithium battery as in any one of clauses 1 to 3, wherein an amount of the natural graphite is about 78.5 wt% to about 89 wt%, based on a total weight of the negative active material.
Clause 5. The negative active material for a rechargeable lithium battery as in any one of clauses 1 to 4, wherein each of the plurality of primary particles has a particle diameter of about 4 µm to about 8 µm.
Clause 6. The negative active material for a rechargeable lithium battery as in any one of clauses 1 to 5, wherein the secondary particle has a particle diameter of about 5 µm to about 10 µm.
Clause 7. The negative active material for a rechargeable lithium battery as in any one of clauses 1 to 6, wherein the tertiary particle has a particle diameter of about 9 µm to about 15 µm.
Clause 8. The negative active material for a rechargeable lithium battery as in any one of clauses 1 to 7, wherein the negative active material has a particle diameter of about 9.05 µm to about 16 µm.
Clause 9. The negative active material for a rechargeable lithium battery as in any one of clauses 1 to 8, wherein the coating layer has a thickness of about 5 nm to about 50 nm.
Clause 10. The negative active material for a rechargeable lithium battery as in any one of clauses 1 to 9, wherein the negative active material has a tap density of about 0.8 g/cc to about 1.1 g/cc.
Clause 11. The negative active material for a rechargeable lithium battery as in any one of clauses 1 to 10, wherein the negative active material has an orientation index of about 40 to about 70.
Clause 12. The negative active material for a rechargeable lithium battery as in any one of clauses 1 to 11, wherein the negative active material has a mercury cumulative pore volume of about 0.01 mL/g to about 0.07 mL/g.
Clause 13. The negative active material for a rechargeable lithium battery as in any one of clauses 1 to 12, wherein the amorphous carbon layer includes soft carbon, hard carbon, mesophase pitch carbide, sintered cokes, sintered cokes, or a mixture thereof.
Clause 14. A rechargeable lithium battery, comprising:
   a negative electrode including the negative material of any one of clauses 1 to 13;
   a positive electrode; and
   an electrolyte.

## Claims

1. A negative active material for a rechargeable lithium battery, the negative active material comprising:
tertiary particles including graphite and an agglomerated product where secondary particles where a plurality of primary particles is agglomerated and spheroidized, are agglomerated; and
an amorphous carbon coating layer surrounding the tertiary particles,
wherein the primary particles and the secondary particles are natural graphite.

2. The negative active material for a rechargeable lithium battery as claimed in claim 1, wherein the graphite is artificial graphite.

3. The negative active material for a rechargeable lithium battery as claimed in claim 1 or claim 2, wherein the graphite is positioned on a surface of the primary particles and a surface of the secondary particles.

4. The negative active material for a rechargeable lithium battery as claimed in any one of claims 1 to 3, wherein the natural graphite is a flake natural graphite.

5. The negative active material for a rechargeable lithium battery as claimed in any one of claims 1 to 4, wherein an amount of the artificial graphite is about 9 wt% to about 16.5 wt%, based on a total weight of the negative active material.

6. The negative active material for a rechargeable lithium battery as claimed in any one of claims 1 to 5, wherein an amount of the natural graphite is about 78.5 wt% to about 89 wt%, based on a total weight of the negative active material.

7. The negative active material for a rechargeable lithium battery as claimed in any one of claims 1 to 6, wherein the plurality of primary particles has a particle diameter of about 4 µm to about 8 µm.

8. The negative active material for a rechargeable lithium battery as claimed in any one of claims 1 to 7, wherein the secondary particle has a particle diameter of about 5 µm to about 10 µm.

9. The negative active material for a rechargeable lithium battery as claimed in any one of claims 1 to 8, wherein the tertiary particle has a particle diameter of about 9 µm to about 15 µm.

10. The negative active material for a rechargeable lithium battery as claimed in any one of claims 1 to 9, wherein the negative active material has a particle diameter of about 9.05 µm to about 16 µm.

11. The negative active material for a rechargeable lithium battery as claimed in any one of claims 1 to 10, wherein the coating layer has a thickness of about 5 nm to about 50 nm.

12. The negative active material for a rechargeable lithium battery as claimed in any one of claims 1 to 11, wherein the negative active material has a tap density of about 0.8 g/cc to about 1.1 g/cc.

13. The negative active material for a rechargeable lithium battery as claimed in any one of claims 1 to 12, wherein:
(i) the negative active material has an orientation index of about 40 to about 70; and/or
(ii) the negative active material has a mercury cumulative pore volume of about 0.01 mL/g to about 0.07 mL/g.

14. The negative active material for a rechargeable lithium battery as claimed in any one of claims 1 to 13, wherein the amorphous carbon layer includes soft carbon, hard carbon, mesophase pitch carbide, sintered cokes, sintered cokes, or a mixture thereof.

15. A rechargeable lithium battery, comprising:
a negative electrode including the negative material of any one of claims 1 to 14;
a positive electrode; and
an electrolyte.
